# EUROPÄISCHE PATENTSCHRIFT

(11) **EP 3 586 102 B1**
(45) Veröffentlichungstag und Bekanntmachung des Hinweises auf die Patenterteilung: **21.12.2022**
(21) Anmeldenummer: 18707885.2
(22) Anmeldetag: 21.02.2018
(51) Int. Cl.: G01N 15/06, G01N 15/00

(54) **VERFAHREN ZUM BETREIBEN EINES ELEKTROSTATISCHEN PARTIKELSENSORS UND ELEKTROSTATISCHER PARTIKELSENSOR**
METHOD FOR OPERATING AN ELECTROSTATIC PARTICLE SENSOR AND ELECTROSTATIC PARTICLE SENSOR
PROCÉDÉ POUR FAIRE FONCTIONNER UN CAPTEUR DE PARTICULES ÉLECTROSTATIQUE, ET CAPTEUR DE PARTICULES ÉLECTROSTATIQUE

(30) Priorität: 22.02.2017 DE 102017202859
(43) Veröffentlichungstag der Anmeldung: 01.01.2020
(73) Patentinhaber: EmiSense Technologies LLC, Ladera Ranch, CA 92694 (US)
(72) Erfinder: HAMANN, Christoph, 93107 Thalmassing (DE); SCHWARZKOPF, Kay, 93128 Regensburg (DE); STROBL, Christoph, 93333 Neustadt a. d. Donau (DE)
(74) Vertreter: HGF
(86) Internationale Anmeldenummer: PCT/EP2018/054315
(87) Internationale Veröffentlichungsnummer: WO 2018/153942

(56) Entgegenhaltungen:
- US-A1- 2010 005 880
- US-A1- 2013 219 990

## Beschreibung

Die Erfindung betrifft ein Verfahren zum Betreiben eines elektrostatischen Partikelsensors sowie eine elektrostatischen Partikelsensor.

Die Verringerung von Abgasemissionen bei Kraftfahrzeugen ist ein wichtiges Ziel bei der Entwicklung neuer Kraftfahrzeuge. Daher werden Verbrennungsprozesse in Brennkraftmaschinen thermodynamisch optimiert, so dass der Wirkungsgrad der Brennkraftmaschine deutlich verbessert wird. Im Kraftfahrzeugbereich werden Dieselmotoren eingesetzt, die, bei moderner Bauart, einen sehr hohen Wirkungsgrad aufweisen. Der Nachteil dieser Verbrennungstechnik gegenüber optimierten Otto-Motoren ist jedoch ein deutlich erhöhter Ausstoß von Ruß bzw. Partikeln. Der Ruß ist besonders durch die Anlagerung polyzyklischer Aromate stark krebserregend, worauf mit verschiedenen Vorschriften bereits reagiert wurde. So wurden beispielsweise Abgas-Emissionsnormen mit Höchstgrenzen für die Rußemission erlassen. Um die Abgas-Emissionsnormen flächendeckend für Kraftfahrzeuge mit Dieselmotoren erfüllen zu können, besteht die Notwendigkeit, preisgünstige Sensoren herzustellen, die den Rußgehalt im Abgasstrom des Kraftfahrzeuges zuverlässig messen.

Der Einsatz derartiger Partikel- oder Rußsensoren dient der Messung des aktuell ausgestoßenen Rußes, damit dem Motormanagement in einem Kraftfahrzeug in einer aktuellen Fahrsituation Informationen zukommen, um mit regelungstechnischen Anpassungen die Emissionswerte zu reduzieren. Darüber hinaus kann mit Hilfe der Partikelsensoren eine aktive Abgasreinigung durch Abgas-Rußfilter eingeleitet werden oder eine Abgasrückführung zur Brennkraftmaschine erfolgen. Im Falle der Rußfilterung werden regenerierbare Filter verwendet, die einen wesentlichen Teil des Rußgehaltes aus dem Abgas herausfiltern. Benötigt werden Partikelsensoren für die Detektion von Ruß bzw. Partikeln, um die Funktion der Rußfilter zu überwachen bzw. um deren Regenerationszyklen zu steuern.

Partikelsensoren werden weiterhin zur Überprüfung der Funktionstüchtigkeit von Partikelfiltern eingesetzt. Dabei wird ein Partikelsensor im Abgasstrang einer Brennkraftmaschine bevorzugt stromabwärts eines Partikelsensors angeordnet. Überschreitet die Partikelmenge einen vorbestimmten Schwellenwert, kann auf einen nicht mehr ordnungsgemäß arbeitenden Partikelfilter geschlossen werden.

Der Stand der Technik zeigt verschiedene Ansätze zur Detektion von Ruß. Ein in Laboratorien weithin verfolgter Ansatz besteht in der Verwendung der Lichtstreuung durch die Rußpartikel. Diese Vorgehensweise eignet sich für aufwändige Messgeräte. Wenn versucht wird, dies auch als mobiles Sensorsystem im Abgasstrang einzusetzen, muss festgestellt werden, dass Ansätze zur Realisierung eines optischen Sensors in einem Kraftfahrzeug mit sehr hohen Kosten verbunden sind. Weiterhin bestehen ungelöste Probleme bezüglich der Verschmutzung der benötigten optischen Fenster durch Verbrennungsabgase.

Die DE 195 36 705 Al offenbart eine Vorrichtung zur Messung von Rußpartikeln, wobei ein elektrisches Feld zwischen einer von dem Gasstrom durchströmten Mantel-Elektrode und einer Innen-Elektrode innerhalb dieser Mantel-Elektrode durch Anlegen einer konstanten elektrischen Gleichspannung erzeugt wird und der Ladestrom zur Aufrechterhaltung der konstanten Gleichspannung zwischen Mantel-Elektrode und Innen-Elektrode gemessen wird.

Die US 2013 / 0219990 A1 beschreibt einen elektrostatischen Partikelsensor.

Aus der US 2010 / 0005880 A1 ist eine Vorrichtung zum Bestimmen und/oder Überwachen einer Prozessvariable eines Mediums in einem Behälter bekannt.

Ein Problem, das bei der Messung von Partikeln mit Hilfe von elektrostatischen Partikelsensoren im Abgasstrang eines Kraftfahrzeugs besteht, ist, dass ein kalter Partikelsensor, zum Beispiel nach dem Start eines erkalteten Verbrennungsmotors, nicht zur Partikelmessung verwendet werden kann, da sich Kondenswasser aus dem Abgasstrom auf und in dem Rußsensor ablagert und diesen zunächst unstabil für einen Hochspannungsbetrieb macht, was eine zuverlässige Partikelmessung ausschließt. Im Abgas eines Verbrennungsmotors ist immer ein hoher Anteil von Wasser in der Gasphase vorhanden, da die Kohlenwasserstoffe zum Beispiel aus dem Dieselkraftstoff vorwiegend zu Wasser und Kohlendioxyd verbrennen. Solange der Partikelsensor kalt ist, kondensiert das Wasser aus dem Abgas zu flüssigem Wasser auf den Elektroden und dem Isolationskörper und stört damit die Partikelmessung nachhaltig. Daher sollte mit dem Beginn der Partikelmessung so lange gewartet werden, bis der Partikelsensor derart warm geworden ist, dass kein Wasser aus dem Abgasstrom mehr auskondensieren kann und das schon auskondensierte Wasser aus dem Partikelsensor abgetrocknet ist. Zu diesem Zeitpunkt erfolgt die sogenannte Taupunktfreigabe für den Partikelsensor. Ausschließlich anhand von Motormodellen in Verbindung mit einer Temperaturmessung im Abgasstrom kann nur eine sehr ungenaue Taupunktfreigabe erfolgen, da die vollständige Trocknung des Rußsensors von sehr vielen Faktoren (zum Beispiel Umgebungstemperatur des Fahrzeuges, Luftfeuchtigkeit der Ansaugluft, Gasmassenstrom im Abgasstrang) abhängt.

Die auf den isolierenden Bauteilen kondensierte Feuchtigkeit kann die elektrisch leitenden Bauteile ungewollt elektrisch miteinander verbinden bzw. kurzschließen und dadurch elektrische Leckageströme verursachen. Diese elektrischen Leckageströme können sich nachteilig auf beispielsweise Lotverbindungen innerhalb des Partikelsensors auswirken, insbesondere in solchen Lotverbindungen eine sogenannte Elektromigration bzw. Lotmigration hervorrufen, was zu einer Verschlechterung der Dauerhaftigkeit der Lotverbindung führen kann. Beispielsweise sind die isolierenden Bauteile mittels Lotverbindungen mit den elektrisch leitenden Bauteilen verbunden.

Ferner führt die Elektromigration bzw. Lotmigration dazu, dass sich Ionen teilweise aus der Lotverbindung lösen und sich auf der Oberfläche des Isolationskörpers ablagern können. Eine so auf der Oberfläche des Isolationskörpers abgelagerte Schicht kann die unterschiedlichen Elektroden kurzschließen und folglich erhöhte Leckageströme verursachen.

Die Elektromigration oder Lotmigration wird insbesondere durch eine anliegende elektrische Spannung und der Feuchtigkeit auf den isolierenden Bauteilen gefördert. Ferner können die im Abgas vorherrschenden hohen Temperaturen die Elektromigration oder Lotmigration begünstigen. Die Elektromigration oder Lotmigration kann also zu erhöhter Korrosion der Bauteile des Partikelsensors führen.

Es ist eine Aufgabe der vorliegenden Erfindung, ein Verfahren zum Betreiben eines elektrostatischen Partikelsensor sowie einen elektrostatischen Partikelsensor vorzusehen, bei dem die Gefahr von Elektromigration oder Lotmigration reduziert ist und eine Korrosion der Bauteile des Partikelsensors zumindest teilweise verhindert wird.

Die Aufgabe wird mit dem Verfahren gemäß unabhängigem Anspruch 1 und mit dem elektrostatischen Partikelsensor gemäß unabhängigem Anspruch 9 gelöst. Bevorzugte und vorteilhafte Ausgestaltungen sind in den Unteransprüchen angegeben.

In einem ersten Aspekt betrifft die vorliegende Erfindung ein Verfahren zum Betreiben eines zum Erfassen der Partikelkonzentration im Abgas einer Brennkraftmaschine ausgebildeten elektrostatischen Partikelsensors, der eine erste Elektrode, eine von der ersten Elektrode mittels eines Isolationskörpers elektrisch isolierte zweite Elektrode, eine von der ersten Elektrode und der zweiten Elektrode mittels des Isolationskörpers elektrisch isolierte Guardelektrode und eine Spannungsversorgung aufweist, die dazu ausgebildet ist, im Messbetrieb des Partikelsensors ein erstes elektrisches Potential an der ersten Elektrode anzulegen, ein zweites elektrisches Potential an der zweiten Elektrode derart anzulegen, dass eine elektrische Spannung zwischen der ersten Elektrode und der zweiten Elektrode entsteht, und ein elektrisches Guardpotential an der Guardelektrode anzulegen. Das erfindungsgemäße Verfahren umfasst ein Anlegen des ersten elektrischen Potentials an der ersten Elektrode, Anlegen des zweiten elektrischen Potentials an der zweiten Elektrode und Anlegen des elektrischen Guardpotentials an der Guardelektrode, und ein Begrenzen eines zwischen der ersten Elektrode und der Guardelektrode über den Isolationskörper fließenden ersten Leckagestroms auf einen ersten Leckagestrombegrenzungswert mittels eines zwischen der Guardelektrode und der Spannungsversorgung angeordneten ersten elektrischen Begrenzungswiderstands.

Der erste elektrische Begrenzungswiderstand ist dabei ein separater elektrischer Widerstand, der ein separates Bauteil ist und der unabhängig von den inhärenten Innenwiderständen der mehreren Bauteile, wie z. B. Guardelektrode, erste Elektrode, zweite Elektrode und Isolationskörper, des Partikelsensors 1 ist.

Folglich basiert die vorliegende Erfindung zumindest teilweise darauf, die über den Isolationskörper fließenden Leckageströme auf einen vorbestimmten Leckagestrombegrenzungswert zu begrenzen, wodurch die Korrosion der Bauteile des Partikelsensors 1 zumindest teilweise reduziert werden kann. Der vorbestimmte Leckagestrombegrenzungswert ist dabei deutlich kleiner als der maximal strömende Leckagestrom, der sich aufgrund der angelegten Spannungspotentiale maximal ergeben kann. Das Begrenzen der Leckageströme erfolgt dabei mittels zumindest eines elektrischen Begrenzungswiderstands.

In einer bevorzugten Ausgestaltung umfasst das Verfahren ferner ein Begrenzen eines zwischen der Guardelektrode und der zweiten Elektrode über den Isolationskörper fließenden zweiten Leckagestroms mittels eines zwischen der zweiten Elektrode und der Spannungsversorgung angeordneten zweiten elektrischen Begrenzungswiderstands.

Vorteilhafterweise umfasst das erfindungsgemäße Verfahren ferner ein Erfassen des ersten Leckagestroms, der über den Isolationskörper zwischen der ersten Elektrode und der Guardelektrode fließt, und ein Trennen der ersten Elektrode vom ersten elektrischen Potential sowie ein Trennen der Guardelektrode vom Guardpotential, wenn der erfasste erste Leckagestrom einen vorbestimmten ersten Leckagestromschwellenwert überschreitet. Vorzugsweise erfolgen das Trennen der ersten Elektrode vom ersten elektrischen Potential und das Trennen der Guardelektrode vom Guardpotential solange, bis der erfasste erste Leckagestrom den vorbestimmten ersten Leckagestromschwellenwert wieder unterschreitet. Weiterhin ist es bevorzugt, dass das Trennen der ersten Elektrode vom ersten elektrischen Potential und das Trennen der Guardelektrode vom Guardpotential jeweils für zumindest eine erste vorbestimmt Zeitspanne erfolgt. Vorzugsweise umfasst das erfindungsgemäße Verfahren ferner ein Erfassen eines zweiten Leckagestroms, der über den Isolationskörper zwischen der zweiten Elektrode und der Guardelektrode fließt, und ein Trennen der Guardelektrode vom Guardpotential und ein Trennen der zweiten Elektrode vom zweiten elektrischen Potential, wenn der erfasste zweite Leckagestrom einen vorbestimmten zweiten Leckagestromschwellenwert überschreitet. Vorzugsweise erfolgen das Trennen der Guardelektrode vom Guardpotential und das Trennen der zweiten Elektrode vom zweiten elektrischen Potential solange, bis der erfasste zweite Leckagestrom den vorbestimmten zweiten Leckagestromschwellenwert wieder unterschreitet. Dabei ist es bevorzugt, dass das Trennen der Guardelektrode vom Guardpotential und das Trennen der zweiten Elektrode vom zweiten elektrischen Potential jeweils für zumindest eine zweite vorbestimmte Zeitspanne erfolgt.

Gemäß einem weiteren Aspekt der vorliegenden Erfindung ist ein elektrostatischer Partikelsensor zum Erfassen der Partikelkonzentration im Abgas einer Brennkraftmaschine vorgesehen. Der erfindungsgemäße Partikelsensor weist eine erste Elektrode, eine von der ersten Elektrode mittels eines Isolationskörpers elektrisch isolierte zweite Elektrode, eine von der ersten Elektrode und der zweiten Elektrode mittels des Isolationskörpers elektrisch Isolierte Guardelektrode, eine Spannungsversorgung, die dazu ausgebildet ist, ein erstes elektrisches Potential an der ersten Elektrode anzulegen, ein zweites elektrisches Potential an der zweiten Elektrode derart anzulegen, dass eine elektrischen Spannung zwischen der ersten Elektrode und der zweiten Elektrode entsteht, und ein elektrisches Guardpotential an der Guardelektrode anzulegen, und einen zwischen der Guardelektrode und der Spannungsversorgung angeordneten ersten elektrischen Begrenzungswiderstand zum Begrenzen eines zwischen der ersten Elektrode und der Guardelektrode über den Isolationskörper fließenden ersten Leckagestroms auf.

Bevorzugt weist der erfindungsgemäße elektrostatische Partikelsensor ferner einen zwischen der zweiten Elektrode und der Spannungsversorgung angeordneten zweiten elektrischen Begrenzungswiderstand zum Begrenzen eines zwischen der Guardelektrode und der zweiten Elektrode über den Isolationskörper fließenden zweiten Leckagestroms auf.

Alternativ oder zusätzlich kann der über den Isolationskörper fließende Leckagestrom aktiv auf einen niedrigen Wert, der kleiner als der vorbestimmte Leckagestromschwellenwert ist, gesteuert bzw. geregelt werden. Die Regelung kann dabei vorzugsweise mittels MOSFET erfolgen.

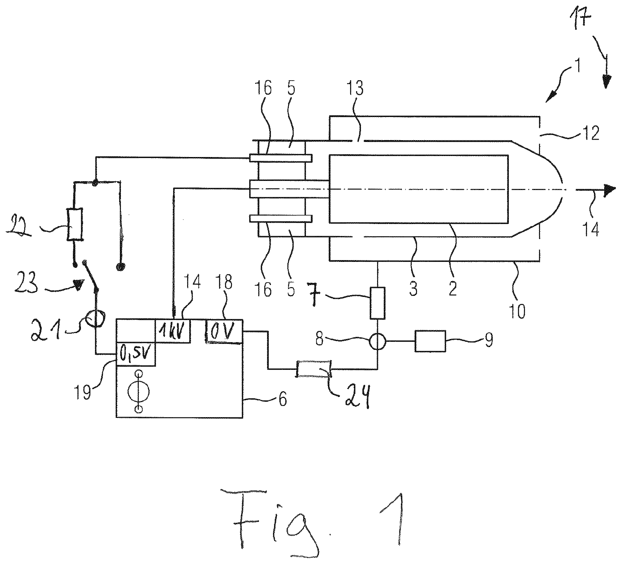

Weitere Aufgaben und Merkmale der vorliegenden Erfindung werden dem Fachmann durch Ausüben der beschriebenen Lehre und durch Betrachten der einzigen beiliegenden Fig. 1 ersichtlich, in der einen erfindungsgemäßer Partikelsensor dargestellt ist.

Fig. 1 zeigt einen Partikelsensor 1. Der Partikelsensor 1 besteht aus einer ersten Elektrode 2, die im Inneren einer zweiten Elektrode 3 angeordnet ist. Zwischen der ersten Elektrode 2 und der zweiten Elektrode 3 befindet sich ein Abgas 17 einer nicht dargestellten Brennkraftmaschine, in dem Rußpartikel enthalten sind. Die Konzentration der Rußpartikel im Abgas 17 soll durch den Partikelsensor 1 gemessen werden. Mit anderen Worten kann gesagt werden, dass mit dem Partikelsensor 1 der Partikelgehalt im Abgasstrom 17 bestimmt werden soll. Dazu wird eine Messspannung durch eine Spannungsversorgung 6 zwischen der ersten Elektrode 2 und der zweiten Elektrode 3 angelegt. Diese Spannung resultiert aus einem ersten elektrischen Potential, das an die erste Elektrode 2 angelegt wird, und einem zweiten elektrischen Potential, das an die zweite Elektrode 3 angelegt wird. Die erste Elektrode 2 ist von der zweiten Elektrode 3 mithilfe eines Isolationskörpers 5 elektrisch isoliert. Der Isolationskörper 5 kann zum Beispiel als Scheibe aus einem keramischen Material aufgebaut sein.

Darüber hinaus ist im Partikelsensor 1 eine von der ersten Elektrode 2 und der zweiten Elektrode 3 elektrisch isolierte Guardelektrode 16 angeordnet, die vorzugsweise am Isolationskörper 5 angebracht ist und in erster Linie zur Stabilisierung der Spannungsverhältnisse und der elektrischen Potentiale im Partikelsensor 1 genutzt wird und dafür sorgt, dass im Messbetrieb des Partikelsensors 1 etwaige elektrische Leckageströme zwischen der erste Elektrode 2 und der zweiten Elektrode 3 abgeleitet werden können.

In der Fig. 1 ist ferner eine Schutzkappe 10 zu erkennen, die zur gezielten Führung des Abgasstroms 17 durch den Partikelsensor 1 dient. Die Abgase können beispielsweise durch eine erste Öffnung 12 in der Schutzkappe in den Rußsensor 1 eindringen und über eine in der zweiten Elektrode 3 gebildeten zweiten Öffnung 13 in einen Messbereich strömen, wo zwischen der ersten Elektrode 2 und der zweiten Elektrode 3 der Partikelgehalt im Abgas gemessen werden kann. Danach verlässt der Abgasstrom 17 durch eine in der zweiten Elektrode 3 vorgesehene dritte Öffnung 14 den Partikelsensor 1 und wird zurück in den Hauptabgasstrom 17 geführt.

Im Messbetrieb des Partikelsensors 6 kann mittels der Spannungsversorgung 6 ein Guardpotential 19 an der Guardelektrode 16 angelegt werden. Mit der Guardelektrode 16 kann vor dem Zeitpunkt der Taupunktfreigabe ein Strom gemessen werden, der als Indikator für eine Taupunktfreigabe des Partikelsensors 1 ausgewertet werden kann. Der Leckagestrom wird von der Spannung an der ersten Elektrode 2 (in diesem Beispiel 1.000 V) über den feuchten Isolationskörper 5 hin zur Guardelektrode 16 getrieben, die in diesen Beispiel mit 0,5 V etwas gegen das Massepotential von 0 V an der zweiten Elektrode 3 vorgespannt ist. Erst wenn dieser Leckagestrom deutlich, also um mindestens eine Zehnerpotenz, nach dem Start des kalten Verbrennungsmotors absinkt, kann auf eine vollständige Trocknung des Partikelsensors 1 geschlossen werden und eine Taupunktfreigabe erfolgen.

Elektrische Leckageströme sind also unerwünschte Ströme, die infolge unzureichender Isolationseigenschaften über den Isolationskörper 5 im Messbetrieb des Partikelsensors 1 fließen und damit die Messergebnisse des Partikelsensors 1 wesentlich verfälschen können. Im Messbetrieb des Partikelsensors 1 wird vorzugsweise das an der ersten Elektrode 2 angelegte erste elektrische Potential 14 weit oberhalb des an der zweiten Elektrode 3 angelegten zweiten elektrischen Potentials 18 und weit oberhalb des an der Guardelektrode 16 angelegten Guardpotentials 19 eingestellt. Dadurch fließen eventuell vorhandene erste Leckageströme von der ersten Elektrode 2 zur Guardelektrode 16 und werden dort abgeleitet.

Ferner wird vorzugsweise das Guardpotential 19 der Guardelektrode 16 etwas oberhalb des zweiten Potentials 18 der zweiten Elektrode 3 eingestellt. Dadurch fließen eventuell vorhandene zweite Leckageströme von der Guardelektrode 16 zur zweiten Elektrode 3.

Bei einer beispielhaften Messkonfiguration liegt die erste Elektrode auf sehr hohem Potential, z. B. 1.000 V, die zweite Elektrode 3 auf Ground-Potential, d. h. auf 0 V, und die Guardelektrode 16 auf etwas erhöhtem Potential, z. B. auf 0,5 V.

In der Fig. 1 ist gezeigt, dass zwischen der Spannungsversorgung 6 und der Guardelektrode 16 ein erster elektrischer Begrenzungswiderstand 22 angeordnet ist, der mittels eines Schalters 23 zuschaltbar ist. Alternativ ist der erste elektrische Begrenzungswiderstand 22 dauerhaft zwischen der Spannungsversorgung 6 und der Guardelektrode 16 vorgesehen. Die von der ersten Elektrode 2 über den Isolationskörper 5 zur Guardelektrode 16 fließenden ersten Leckageströme können mittels eines ersten Strommesselements 21 erfasst werden.

Der erste elektrische Begrenzungswiderstand 22 ist ein separater elektrischer Widerstand, der ein separates Bauteil ist und der unabhängig von den inhärenten Innenwiderständen der mehreren Bauteile, wie z. B. Guardelektrode 16, erste Elektrode 2, zweite Elektrode 3 und Isolationskörper 5, des Partikelsensors 1 ist. Beispielsweise kann der inhärente Innenwiderstand des Isolationskörpers 5, über dessen Oberfläche der Leckagestrom strömt, von der Temperatur des Isolationskörpers 5, dem Oberflächenverschmutzungsgrad des Isolationskörpers 5 oder dem Material des Isolationskörpers 5 abhängen. Der erste Begrenzungswiderstand 22 ist jedoch ein zu diesem inhärenten Innenwiderstand zusätzlicher, separater und unabhängiger elektrischer Widerstand.

Ein elektrischer Widerstand 7 ist zwischen der Spannungsversorgung 6 und der zweiten Elektrode 3 vorgesehen, der in der gezeigten Ausgestaltung hochohmig ausgeführt ist, um die relativ kleinen Ströme zu messen, die sich aufgrund der Rußpartikel 4 zwischen der ersten Elektrode 2 und der zweiten Elektrode 3 ausbilden können. Die Messung dieser zweiten Leckageströme erfolgt durch ein zweites Strommesselement 8, das mit einer Auswerteelektronik 9 verbunden ist.

Weiterhin ist in Fig. 1 zu erkennen, dass zwischen der Spannungsversorgung 6 und der zweiten Elektrode 3 ein zweiter elektrischer Begrenzungswiderstand 24 geschaltet ist, der, wie der erste elektrische Begrenzungswiderstand 22, ein vom Innenwiderstand der Bauteile des Partikelsensors 1 separater elektrischer Widerstand ist. Die von der Guardelektrode 16 über den Isolationskörper 5 zur zweiten Elektrode 3 fließenden zweiten Leckageströme können mittels des zweiten Strommesselements 8 erfasst werden.

Beispielsweise weisen der erste elektrische Begrenzungswiderstand 22 und/oder der zweite elektrische Begrenzungswiderstand einen Widerstandswert auf, der im Bereich von 0, 1 GΩ bis ungefähr 10 GΩ liegt.

Die Spannung, die zwischen der ersten Elektrode 2 und der zweiten Elektrode 3 angelegt wird, ist relativ hoch, um verwertbare Messströme zu erhalten. Eine derartige Spannung liegt zwischen 100 V und 3.000 V und ist damit relativ aufwendig zu kontrollieren. Insbesondere Wasserablagerungen auf der ersten Elektrode 2 und der zweiten Elektrode 3 sowie auf dem Isolationskörper 5 können zu einer vollständigen Verfälschung der Partikelmessung führen. Ferner können die über den Isolationskörper 5 fließenden ersten und zweiten Leckageströme eine übermäßig große Korrosion der Bauteile des Partikelsensors 1 hervorrufen und ferner zu Elektromigration bzw. Lotmigration in den Lotverbindungen des Partikelsensors 1 führen. Daher muss der Partikelsensor 1 vor Beginn der Messung völlig abgetrocknet sein, was durch die sogenannte Taupunktfreigabe signalisiert werden kann.

Rußpartikel, die im Abgasstrom 17 der Brennkraftmaschine durch ein Auspuffrohr transportiert werden, können in den im Abgasstrang integrierten Partikelsensor 1 eindringen. Die Rußpartikel gelangen in ein elektrisches Feld, das sich aufgrund der angelegten elektrischen Spannung zwischen der ersten Elektrode 2 und der zweiten Elektrode 3 ausbildet. Beim Überschreiten der Durchbruchsfeldstärke des Gases werden elektrisch geladene Partikel gebildet, die in Richtung der entgegengesetzten Elektrode beschleunigt werden und infolge von Stoßionisationen zu einer lavinenartigen Ausbildung von Ladungsträgern führen. Wenn diese Ladungsträgerlavine eine Elektrodenoberfläche erreicht, ist ein sehr hoher Strom messbar, der gut ausgewertet werden kann und der proportional zur Anzahl der geladenen Partikel im Abgas ist.

Durch Anlegen des ersten Potentials 14 an die erste Elektrode 2 und Anlegen des deutlich kleineren Guardpotentials 19 an die Guardelektrode 16 werden die ersten Leckageströme von der ersten Elektrode 2 zur Guardelektrode 16 abgeleitet. Außerdem werden durch Anlegen des Guardpotentials 19 an die Guardelektrode 16 und durch Anlegen des zweiten Potentials 18 an die zweite Elektrode 3 die zweiten Leckageströme nahezu vollständig von der Guardelektrode 16 zur zweiten Elektrode 3 abgeleitet.

Die Guardelektrode 16 ist in diesem Beispiel in den keramischen Isolationskörper 5 des Partikelsensors 1 integriert. Der Isolationskörper 5 muss jedoch nicht notwendigerweise aus einer Keramik bestehen. Es ist auch denkbar, z. B. einen hitzefesten Kunststoff einzusetzen oder andere isolierende Materialien, wie z. B. Materialien aus dem Element Kohlenstoff in einer entsprechenden Kristallgitterstruktur, die zu einer hohen Isolation führt.

Die ersten und/oder zweiten Leckageströme können zu einer sogenannten Elektromigration bzw. Lotmigration in Lotverbindungen im Partikelsensoren 1 führen, mittels derer beispielsweise die erste Elektrode 2 mit dem Isolationskörper 5 verbunden ist. Die Elektromigration bzw. Lotmigration kann zu einem Lösen der Lotverbindungen führen und/oder die Bauteile des Partikelsensors 1 unnötig stark korrodieren.

Erfindungsgemäß wird während des Messbetriebs des Partikelsensors 1 der erste elektrische Begrenzungswiderstand 22 zugeschaltet, der dazu ausgebildet ist, den zwischen der ersten Elektrode 2 und der Guardelektrode 16 über den Isolationskörper 5 fließenden ersten Leckagestrom auf einen ersten Leckagestrombegrenzungswert zu begrenzen. Der erste Leckagestrombegrenzungswert beträgt beispielsweise ungefähr 1 µA/cm² und ist vorzugsweise deutlich kleiner als ein maximaler erster Leckagestrom, der ohne einem solchen ersten Begrenzungswiderstand 22 zwischen der ersten Elektrode 2 und der Guardelektrode 16 über den Isolationskörper 5 maximal fließen würde. Durch das Begrenzen des ersten Leckagestroms kann die Elektromigration bzw. Lotmigration der Lotverbindungen zumindest teilweise reduziert und die Korrosion der Bauteile des Partikelsensors zumindest teilweise vermieden werden.

Zudem kann der zweite Begrenzungswiderstand 24 dazu ausgebildet sein, den zwischen der zweiten Elektrode 3 und der Guardelektrode 16 über den Isolationskörper 5 fließenden zweiten Leckagestrom auf einen zweiten Leckagestrombegrenzungswert zu begrenzen. Der zweite Leckagestrombegrenzungswert beträgt beispielsweise ungefähr 1 µA/cm² und ist vorzugsweise deutlich kleiner als ein zweiter Leckagestrom, der ohne einem solchen zweiten Begrenzungswiderstand 24 zwischen der zweiten Elektrode 3 und der Guardelektrode 16 über den Isolationskörper 5 maximal fließen würde. Durch das Begrenzen des zweiten Leckagestroms kann die Elektromigration bzw. Lotmigration der Lotverbindungen zumindest teilweise reduziert und die Korrosion der Bauteile des Partikelsensors 1 zumindest teilweise vermieden werden.

In einer weiteren Ausgestaltung ist der erste bzw. zweite Leckagestrombegrenzungswert derart gewählt, dass dieser größer als ein erster bzw. zweiter Leckagestromschwellenwert ist. Überschreitet der erste bzw. zweite Leckagestrom den ersten bzw. zweiten Leckagestrombegrenzungswert, bleibt aber gleichzeitig unterhalb des ersten bzw. zweiten Leckagestrombegrenzungswerts, wird erfindungsgemäß der Messbetrieb des Partikelsensors 1 unterbrochen, beispielsweise für eine vorbestimmte erste bzw. zweite Zeitspanne. Nach dem Ablauf der ersten bzw. zweiten Zeitspanne werden mittels der Spannungsversorgung sämtliche Potentiale erneut angelegt, so dass der Partikelsensor 1 wieder messbereit ist. Ist dann der erste bzw. zweite Leckagestrom nach dem Ablauf der vorbestimmten ersten bzw. zweiten Zeitspanne wieder unterhalb des zugehörigen ersten bzw. zweiten Leckagestromschwellenwert gesunken, kann der Partikelsensor 1 wieder standardmäßig betrieben werden. Falls nicht, wird der Messbetrieb des Partikelsensors 1 weiterhin solange unterbrochen, bis der erste bzw. zweite Leckagestrom unter den zugehörigen ersten bzw. zweiten Leckagestromschwellenwert gesunken ist.

Gemäß einem alternativen Aspekt der vorliegenden Offenbarung kann ein Verfahren zum Betreiben eines zum Erfassen der Partikelkonzentration im Abgas einer Brennkraftmaschine ausgebildeten elektrostatischen Partikelsensors vorgesehen sein. Der Partikelsensor weist eine erste Elektrode, eine von der ersten Elektrode mittels eines Isolationskörpers elektrisch isolierte zweite Elektrode, eine von der ersten Elektrode und der zweiten Elektrode mittels des Isolationskörpers elektrisch isolierte Guardelektrode und eine Spannungsversorgung auf, die dazu ausgebildet ist, im Messbetrieb des Partikelsensors ein erstes elektrisches Potential an der ersten Elektrode anzulegen, ein zweites elektrisches Potential an der zweiten Elektrode derart anzulegen, dass eine elektrische Spannung zwischen der ersten Elektrode und der zweiten Elektrode entsteht, und ein elektrisches Guardpotential an der Guardelektrode anzulegen. Ein solches alternatives Verfahren weist ein Anlegen des ersten elektrischen Potentials an der ersten Elektrode, ein Anlegen des zweiten elektrischen Potentials an der zweiten Elektrode und ein Anlegen des elektrischen Guardpotentials an der Guardelektrode auf. Ferner weist ein solches alternatives Verfahren ein Erfassen eines über den Isolationskörper fließenden Leckagestroms und ein Trennen des ersten elektrischen Potentials von der ersten Elektrode, ein Trennen des zweiten elektrischen Potentials von der zweiten Elektrode und ein Trennen des elektrischen Guardpotentials von der Guardelektrode auf, wenn der erfasste Leckagestrom einen vorbestimmten Leckagestromschwellenwert überschreitet.

In einer bevorzugten Ausgestaltung eines solchen alternativen Verfahrens werden die erste Elektrode, die zweite Elektrode und die Guardelektrode von dem jeweils zugeordneten Potential für eine vorbestimmte Zeitspanne getrennt. Nach Ablauf dieser vorbestimmten Zeitspanne werden an der ersten Elektrode, an der zweiten Elektrode und an der Guardelektrode wieder jeweils die zugeordneten Potentiale angelegt und nochmal der über den Isolationskörper fließende Leckagestrom erfasst. Ist dieser erfasste Leckagestrom dann wieder unterhalb des Leckagestromschwellenwerts, kann der Partikelsensor in den Messbetrieb geschaltet werden und die eigentliche Partikelmessung kann erfolgen. Ist aber der erfasste Leckagestrom dann wieder unterhalb des Leckagestromschwellenwerts

Somit basiert das alternative Verfahren zum Betreiben eines elektrostatischen Partikelsensors darauf, anstelle des Begrenzens des ersten bzw. zweiten Leckagestroms den ersten bzw. zweiten Leckagestrom quantitativ zu erfassen und den Messbetrieb des Partikelsensors 1 dann zu unterbrechen, wenn der erste bzw. zweite Leckagestrom einen vorbestimmten ersten bzw. zweiten Leckagestrombegrenzungswert überschreitet. Ist dies der Fall, wird der Messbetrieb des Partikelsensors 1 solange unterbrochen, bis der erste bzw. zweite Leckagestrom wieder unter den zugehörigen ersten bzw. zweiten Leckagestromschwellenwert gesunken ist.

Beispielsweise wird hierzu der Messbetrieb des Partikelsensors 1 für eine vorbestimmte erste bzw. zweite Zeitspanne unterbrochen, z. B. für ungefähr 30 s. Nach dem Ablauf der vorbestimmten ersten bzw. zweiten Zeitspanne wird durch Anlegen sämtlicher elektrischen Potentiale der Partikelsensor 1 wieder in den Messbetrieb geschaltet. Ist dann der erste bzw. zweite Leckagestrom unterhalb des zugehörigen ersten bzw. zweiten Leckagestrombegrenzungswerts, kann mit der Partikelmessung wie gewohnt fortgefahren werden. Ist aber der erste bzw. zweite Leckagestrom noch nicht unterhalb des zugehörigen ersten bzw. zweiten Leckagestrombegrenzungswerts gesunken, sollte der Messbetrieb des Partikelsensors 1 weiterhin unterbrochen bleiben, da sonst die Korrosion der Bauteile des Partikelsensors 1 unnötig groß sein kann. Erst wenn der erste bzw. zweite Leckagestrom unter den zugehörigen ersten bzw. zweiten Leckagestrombegrenzungswerts gesunken ist, wird der Messbetrieb des Partikelsensors 1 gestartet.

## Patentansprüche

1. Verfahren zum Betreiben eines zum Erfassen der Partikelkonzentration im Abgas einer Brennkraftmaschine ausgebildeten elektrostatischen Partikelsensors (1), der eine erste Elektrode (2), eine von der ersten Elektrode (2) mittels eines Isolationskörpers (5) elektrisch isolierte zweite Elektrode (3), eine von der ersten Elektrode (2) und der zweiten Elektrode (3) mittels des Isolationskörpers (5) elektrisch isolierte Guardelektrode (16) und eine Spannungsversorgung (6) aufweist, die dazu ausgebildet ist, im Messbetrieb des Partikelsensors (1) ein erstes elektrisches Potential (14) an der ersten Elektrode (2) anzulegen, ein zweites elektrisches Potential (18) an der zweiten Elektrode (3) derart anzulegen, dass eine elektrische Spannung zwischen der ersten Elektrode (2) und der zweiten Elektrode (3) entsteht, und ein elektrisches Guardpotential (19) an der Guardelektrode (16) anzulegen, wobei das Verfahren aufweist:
- Anlegen des ersten elektrischen Potentials (14) an der ersten Elektrode (2), Anlegen des zweiten elektrischen Potentials (18) an der zweiten Elektrode (3) und Anlegen des elektrischen Guardpotentials (19) an der Guardelektrode (16),
**dadurch gekennzeichnet, dass** das Verfahren auch aufweist:
- Begrenzen eines zwischen der ersten Elektrode (2) und der Guardelektrode (16) über den Isolationskörper (5) fließenden ersten Leckagestroms auf einen ersten Leckagestrombegrenzungswert mittels eines zwischen der Guardelektrode (16) und der Spannungsversorgung (6) angeordneten ersten elektrischen Begrenzungswiderstands (22).

2. Verfahren nach Anspruch 1, ferner mit:
- Begrenzen eines zwischen der Guardelektrode (16) und der zweiten Elektrode (3) über den Isolationskörper (5) fließenden zweiten Leckagestroms mittels eines zwischen der zweiten Elektrode (3) und der Spannungsversorgung (6) angeordneten zweiten elektrischen Begrenzungswiderstands (24).

3. Verfahren nach einem der vorhergehenden Ansprüche, ferner mit:
- Erfassen des ersten Leckagestroms, der über den Isolationskörper (5) zwischen der ersten Elektrode (2) und der Guardelektrode (16) fließt, und
- Trennen der ersten Elektrode (2) vom ersten elektrischen Potential (14) und Trennen der Guardelektrode (16) vom Guardpotential (19) , wenn der erfasste erste Leckagestrom einen vorbestimmten ersten Leckagestromschwellenwert überschreitet.

4. Verfahren nach Anspruch 3, wobei das Trennen der ersten Elektrode (2) vom ersten elektrischen Potential (14) und das Trennen der Guardelektrode (16) vom Guardpotential (19) solange erfolgt, bis der erfasste erste Leckagestrom den vorbestimmten ersten Leckagestromschwellenwert wieder unterschreitet.

5. Verfahren nach Anspruch 4, wobei das Trennen der ersten Elektrode (2) vom ersten elektrischen Potential (14) und das Trennen der Guardelektrode (16) vom Guardpotential (19) jeweils für zumindest eine erste vorbestimmt Zeitspanne erfolgt.

6. Verfahren nach einem der vorhergehenden Ansprüche, ferner mit:
- Erfassen eines zweiten Leckagestroms, der über den Isolationskörper (5) zwischen der zweiten Elektrode (3) und der Guardelektrode (16) fließt, und
- Trennen der Guardelektrode (16) vom Guardpotential (19) und Trennen der zweiten Elektrode (3) vom zweiten elektrischen Potential (18), wenn der erfasste zweite Leckagestrom einen vorbestimmten zweiten Leckagestromschwellenwert überschreitet.

7. Verfahren nach Anspruch 6, wobei das Trennen der Guardelektrode (16) vom Guardpotential (19) und das Trennen der zweiten Elektrode (3) vom zweiten elektrischen Potential (18) solange erfolgen, bis der erfasste zweite Leckagestrom den vorbestimmten zweiten Leckagestromschwellenwert wieder unterschreitet.

8. Verfahren nach Anspruch 7, wobei das Trennen der der Guardelektrode (16) vom Guardpotential (19) und das Trennen der zweiten Elektrode (3) vom zweiten elektrischen Potential (18) jeweils für zumindest eine zweite vorbestimmte Zeitspanne erfolgen .

9. Elektrostatischer Partikelsensor (1) zum Erfassen der Partikelkonzentration im Abgas einer Brennkraftmaschine, wobei der elektrostatische Partikelsensor (1) aufweist:
- eine erste Elektrode (2),
- eine von der ersten Elektrode (2) mittels eines Isolationskörpers (5) elektrisch isolierte zweite Elektrode (3),
- eine von der ersten Elektrode (2) und der zweiten Elektrode (3) mittels des Isolationskörpers (5) elektrisch Isolierte Guardelektrode (16),
- eine Spannungsversorgung (6), die dazu ausgebildet ist, ein erstes elektrisches Potential (14) an der ersten Elektrode (2) anzulegen, ein zweites elektrisches Potential (18) an der zweiten Elektrode (2) derart anzulegen, dass eine elektrischen Spannung zwischen der ersten Elektrode (2) und der zweiten Elektrode (3) entsteht, und ein elektrisches Guardpotential (19) an der Guardelektrode (16) anzulegen,
**dadurch gekennzeichnet, dass** der elektrostatische Partikelsensor (1) auch aufweist:
- einen zwischen der Guardelektrode (16) und der Spannungsversorgung (6) angeordneten ersten elektrischen Begrenzungswiderstand (22) zum Begrenzen eines zwischen der ersten Elektrode (2) und der Guardelektrode (16) über den Isolationskörper (5) fließenden ersten Leckagestroms.

10. Elektrostatischer Partikelsensor (1) nach Anspruch 9, ferner mit einem zwischen der zweiten Elektrode (3) und der Spannungsversorgung (6) angeordneten zweiten elektrischen Begrenzungswiderstand (24) zum Begrenzen eines zwischen der Guardelektrode (16) und der zweiten Elektrode (3) über den Isolationskörper (5) fließenden zweiten Leckagestroms.

## Claims

1. Method for operating an electrostatic particle sensor (1) designed to detect the particle concentration in the exhaust gas of an internal combustion engine, said particle sensor comprising a first electrode (2), a second electrode (3) electrically insulated from the first electrode (2) by means of an insulating body (5), a guard electrode (16) electrically insulated from the first electrode (2) and from the second electrode (3) by means of the insulating body (5), and a voltage supply (6) which is designed to apply a first electric potential (14) to the first electrode (2) when the particle sensor (1) is in measuring mode, to apply a second electric potential (18) to the second electrode (3) in such a manner that an electrical voltage is created between the first electrode (3), and to apply an electrical guard potential (19) to the guard electrode (16), wherein the method comprises:
- application of the first electrical potential (14) to the first electrode (2), application of the second electrical potential (18) to the second electrode (3) and application of the electrical guard potential (19) to the guard electrode (16),
**characterized in that** the method also comprises:
- limiting a first leakage current flowing between the first electrode (2) and the guard electrode (16) via the insulating body (5) to a first leakage-current limiting value by means of a first electrical limiting resistor (22) arranged between the guard electrode (16) and the voltage supply (6).

2. Method according to Claim 1, further comprising:
- limiting a second leakage current flowing between the guard electrode (16) and the second electrode (3) via the insulating body (5) by means of a second electrical limiting resistor (24) arranged between the second electrode (3) and the voltage supply (6).

3. Method according to one of the preceding claims, further comprising:
- detecting the first leakage current which flows via the insulation body (5) between the first electrode (2) and the guard electrode (16), and
- disconnecting the first electrode (2) from the first electric potential (14) and disconnecting the guard electrode (16) from the guard potential (19), when the detected first leakage current exceeds a predetermined first leakage-current threshold value.

4. Method according to Claim 3, wherein the first electrode (2) is disconnected from the first electric potential (14) and the guard electrode (16) is disconnected from the guard potential (19) until the detected first leakage current once again falls below the predetermined first leakage-current threshold value.

5. Method according to Claim 4, wherein the first electrode (2) is disconnected from the first electric potential (14) and the guard electrode (16) is disconnected from the guard potential (19) for at least a first predetermined timespan in each case.

6. Method according to one of the preceding claims, further comprising:
- detecting a second leakage current flowing between the second electrode (3) and the guard electrode (16) via the insulating body (5) and,
- disconnecting the guard electrode (16) from the guard potential (19) and disconnecting the second electrode (3) from the second electric potential (18), when the detected second leakage current exceeds a predetermined second leakage-current threshold value.

7. Method according to Claim 6, wherein the guard electrode (16) is disconnected from the guard potential (19) and the second electrode (3) is disconnected from the second electric potential (18) until the detected second leakage current once again falls below the predetermined second leakage-current threshold value.

8. Method according to Claim 7, wherein the guard electrode (16) is disconnected from the guard potential (19) and the second electrode (3) is disconnected from the second electric potential (18) for at least a second predetermined timespan in each case.

9. Electrostatic particle sensor (1) for detecting the particle concentration in the exhaust gas of an internal combustion engine, wherein the electrostatic particle sensor (1) comprises:
- a first electrode (2);
- a second electrode (3) electrically insulated from the first electrode (2) by means of an insulating body (5),
- a guard electrode (16) electrically insulated from the first electrode (2) and from the second electrode (3) by means of the insulating body (5),
- a voltage supply (6) designed to apply a first electric potential (14) to the first electrode (2), to apply a second electric potential (18) to the second electrode (2), in such a manner that an electrical voltage is produced between the first electrode (2) and the second electrode (3), and to apply an electric guard potential (19) to the guard electrode (16), **characterized in that** the electrostatic particle sensor (1) also has:
- a first electrical limiting resistor (22) arranged between the guard electrode (16) and the voltage supply (6) for limiting a first leakage current flowing between the first electrode (2) and the guard electrode (16) via the insulating body (5).

10. Electrostatic particle sensor (1) according to Claim 9, further comprising a second electrical limiting resistor (24) arranged between the second electrode (3) and the voltage supply (6) for limiting a second leakage current flowing between the guard electrode (16) and the second electrode (3) via the insulating body (5).

## Revendications

1. Procédé pour faire fonctionner un capteur de particules électrostatique (1) conçu pour détecter la concentration de particules dans les gaz d'échappement d'un moteur à combustion interne, qui présente une première électrode (2), une deuxième électrode (3) isolée électriquement par rapport à la première électrode (2) au moyen d'un corps isolant (5), une électrode de protection (16) isolée électriquement par rapport à la première électrode (2) et de la deuxième électrode (3) au moyen du corps isolant (5) et une alimentation en tension (6), qui est conçue pour appliquer, en mode de mesure du capteur de particules (1), un premier potentiel électrique (14) à la première électrode (2), un deuxième potentiel électrique (18) à la deuxième électrode (3) de telle sorte qu'il se forme une tension électrique entre la première électrode (2) et la deuxième électrode (3), et pour appliquer un potentiel de protection électrique (19) à l'électrode de protection (16), le procédé comprenant :
- l'application du premier potentiel électrique (14) à la première électrode (2), l'application du deuxième potentiel électrique (18) à la deuxième électrode (3) et l'application du potentiel de protection électrique (19) à l'électrode de protection (16), **caractérisé en ce que** le procédé comprend aussi :
- la limitation d'un premier courant de fuite circulant entre la première électrode (2) et l'électrode de protection (16) par l'intermédiaire du corps isolant (5) à une première valeur de limitation de courant de fuite au moyen d'une première résistance électrique de limitation (22) montée entre l'électrode de protection (16) et l'alimentation en tension (6).

2. Procédé selon la revendication 1, comprenant en outre :
- la limitation d'un deuxième courant de fuite circulant entre l'électrode de protection (16) et la deuxième électrode (3) par l'intermédiaire du corps isolant (5) au moyen d'une deuxième résistance électrique de limitation (24) montée entre la deuxième électrode (3) et l'alimentation en tension (6).

3. Procédé selon l'une quelconque des revendications précédentes, comprenant en outre :
- la détection du premier courant de fuite qui circule entre la première électrode (2) et l'électrode de protection (16) par l'intermédiaire du corps isolant (5), et
- la déconnexion de la première électrode (2) du premier potentiel électrique (14) et la déconnexion de l'électrode de protection (16) du potentiel de protection (19) lorsque le premier courant de fuite détecté dépasse une première valeur de seuil de courant de fuite prédéterminée.

4. Procédé selon la revendication 3, dans lequel la déconnexion de la première électrode (2) du premier potentiel électrique (14) et la déconnexion de l'électrode de protection (16) du potentiel de protection (19) ont lieu jusqu'à ce que le premier courant de fuite détecté passe à nouveau en dessous du niveau de la première valeur de seuil de courant de fuite prédéterminée.

5. Procédé selon la revendication 4, dans lequel la déconnexion de la première électrode (2) du premier potentiel électrique (14) et la déconnexion de l'électrode de protection (16) du potentiel de protection (19) s'effectuent chacune pendant au moins une première période de temps prédéterminée.

6. Procédé selon l'une quelconque des revendications précédentes, comprenant en outre :
- la détection d'un deuxième courant de fuite qui circule entre la deuxième électrode (3) et l'électrode de protection (16) par l'intermédiaire du corps isolant (5), et
- la déconnexion de l'électrode de protection (16) du potentiel de protection (19) et la déconnexion de la deuxième électrode (3) du deuxième potentiel électrique (18) lorsque le deuxième courant de fuite détecté dépasse une deuxième valeur de seuil de courant de fuite prédéterminée.

7. Procédé selon la revendication 6, dans lequel la déconnexion de l'électrode de protection (16) du potentiel de protection (19) et la déconnexion de la deuxième électrode (3) du deuxième potentiel électrique (18) ont lieu jusqu'à ce que le deuxième courant de fuite détecté passe à nouveau en dessous de la deuxième valeur de seuil de courant de fuite prédéterminée.

8. Procédé selon la revendication 7, dans lequel la déconnexion de l'électrode de protection (16) du potentiel de protection (19) et la déconnexion de la deuxième électrode (3) du deuxième potentiel électrique (18) s'effectuent chacune pendant au moins une deuxième période de temps prédéterminée.

9. Capteur de particules électrostatique (1) pour détecter la concentration de particules dans les gaz d'échappement d'un moteur à combustion interne, le capteur de particules électrostatique (1) comprenant :
- une première électrode (2),
- une deuxième électrode (3) isolée électriquement par rapport à la première électrode (2) au moyen d'un corps isolant (5),
- une électrode de protection (16) isolée électriquement par rapport à la première électrode (2) et de la deuxième électrode (3) au moyen du corps isolant (5),
- une alimentation en tension (6) adaptée pour appliquer un premier potentiel électrique (14) à la première électrode (2), un deuxième potentiel électrique (18) à la deuxième électrode (2) de manière à créer une tension électrique entre la première électrode (2) et la deuxième électrode (3), et un potentiel de protection électrique (19) à l'électrode de protection (16), **caractérisé en ce que** le capteur de particules électrostatique (1) comprend également :
- une première résistance électrique de limitation (22) montée entre l'électrode de protection (16) et l'alimentation en tension (6) pour limiter un premier courant de fuite circulant entre la première électrode (2) et l'électrode de protection (16) par l'intermédiaire du corps isolant (5).

10. Capteur de particules électrostatique (1) selon la revendication 9, comprenant en outre une deuxième résistance électrique de limitation (24) montée entre la deuxième électrode (3) et l'alimentation en tension (6) pour limiter un deuxième courant de fuite circulant entre l'électrode de protection (16) et la deuxième électrode (3) par l'intermédiaire du corps isolant (5).
